# FASCICULE DE BREVET EUROPEEN

(11) **EP 3 485 418 B1**
(45) Date de publication et mention de la délivrance du brevet: **11.03.2020**
(21) Numéro de dépôt: 17822302.0
(22) Date de dépôt: 21.12.2017
(51) Int. Cl.: G06F 21/60, H04L 29/06

(54) **SYSTÈME ET PROCÉDÉ DE COMMUNICATION UNIDIRECTIONNEL**
SYSTEM UND VERFAHREN ZUR UNIDIREKTIONALEN KOMMUNIKATION
SYSTEM AND METHOD FOR UNIDIRECTIONAL COMMUNICATION

(30) Priorité: 22.12.2016 FR 1663262
(43) Date de publication de la demande: 22.05.2019
(73) Titulaire: Airbus Defence and Space SAS, 31402 Toulouse Cedex 4 (FR)
(72) Inventeur: DUPONT, Gérard, 31402 Toulouse Cedex 4 (FR); LAGARDE, Olivier, 31402 Toulouse Cedex 4 (FR); MARTY, Jean-Luc, 31402 Toulouse Cedex 4 (FR)
(74) Mandataire: Plasseraud IP
(86) Numéro de dépôt international: PCT/EP2017/084232
(87) Numéro de publication internationale: WO 2018/115359

(56) Documents cités:
- US-A1- 2015 161 397
- US-A1- 2016 063 269
- "Chapter 7: Establishing Secure Enclaves; Chapter 8: Exception, Anomaly, and Threat Detection; Chapter 9: Monitoring Enclaves ED - Eric D Knapp", 1 janvier 2011 (2011-01-01), INDUSTRIAL NETWORK SECURITY. SECURING CRITICAL INFRASTRUCTURE NETWORKS FOR SMART GRID, SCADA, AND OTHER INDURSTIAL CONTROL SYSTEMS, SYNGRESS, PAGE(S) 147 - 247, XP002687973, ISBN: 978-1-59749-645-2 page 157 page 163 pages 166-167 page 181 pages 215-218 pages 234-236
- Austin Scott ET AL: "Tactical Data Diodes in Industrial Automation and Control Systems", , 18 mai 2015 (2015-05-18), pages 1-32, XP055290300, GIAC directory of certified professionals Extrait de l'Internet: URL:http://www.giac.org/paper/gicsp/242/ta ctical-data-diodes-industrial-automation-c ontrol-systems/142041 [extrait le 2016-07-21]

## Description

### Domaine technique

La présente invention concerne un système de communication depuis un réseau sécurisé vers un réseau de confiance moindre.

### Technique antérieure

La norme ISO 22301 définit la continuité d'activité d'un système d'information en exploitation comme sa capacité à poursuivre la fourniture de produits ou la prestation de services à des niveaux acceptables et préalablement définit après un incident perturbateur. Également connue sous le sigle MCO pour maintien en condition opérationnelle, la continuité d'activité d'un système d'information en exploitation vise à définir l'ensemble des moyens et procédures nécessaires pour que le système d'information reste, au long de sa durée d'utilisation, apte à l'emploi qui lui est assigné. Le document XP002687973, divulgue une passerelle unidirectionnelle (diode de données) qui est utilisée pour permettre aux données de supervision d'être communiquées à partir d'une enclave critique hautement sécurisée dans une zone démilitarisée (DMZ) moins sécurisée.

Dans les systèmes d'information dits critiques, le MCO représente un coût d'exploitation important car il nécessite souvent la présence sur place d'au moins un technicien de maintenance qui doit se tenir prêt à intervenir à tout moment, dès la détection d'un incident perturbateur. Cette configuration est notamment dictée par le besoin de confidentialité des informations associées au fonctionnement de ces systèmes.

Afin de réduire le coût d'exploitation du MCO, les opérateurs de systèmes d'information critiques envisagent de plus en plus l'utilisation de la télésurveillance comme c'est souvent le cas pour les systèmes d'information non critiques. En pratique, lorsqu'un événement perturbateur se produit, un message d'avertissement est automatiquement transmis au technicien de maintenance d'astreinte, par exemple, via SMS, courriel ou appel vocal sur téléphonie fixe ou cellulaire.

Cependant, l'adoption de la télésurveillance des systèmes d'information critique via un réseau public n'inspire pas confiance aux opérateurs concernés. En effet, les dispositifs utilisés actuellement pour émettre les appels d'astreinte ne garantissent pas une sécurisation suffisante de l'interconnexion entre le système d'information et le réseau public, de sorte qu'il existe des risques d'intrusion informatiques et/ou de perte d'informations sensibles.

Il est donc important de proposer une solution permettant de résoudre ces problèmes car de tels défauts de sécurité peuvent permettre la réalisation d'attaques informatique provoquant, par exemple, la modification du comportement du système d'information, son indisponibilité par saturation de ses ressources ou permettre, par exemple, de récupérer des informations sensibles du système d'information.

### Résumé de l'invention

À cet effet, un premier objet de l'invention concerne un système de communication pour la transmission d'au moins un message depuis un premier réseau d'un premier système d'information vers un second réseau d'un second système d'information, le premier réseau ayant une classification de sécurité supérieure à celle du second réseau. En pratique, le système comprend :
- une entrée de système apte à être connectée au premier réseau, et prévue pour recevoir le message, le message comprenant au moins une première métadonnée associée au fonctionnement du premier système d'information;
- une sortie de système apte à être connectée au second réseau ;
- une unité d'analyse et de filtrage d'information couplée à l'entrée de système, et prévue pour générer un message filtré en filtrant le message en fonction d'un signal de filtrage de sorte qu'au moins une information sensible associée à la au moins une première métadonnée est masquée;
- une unité de chiffrement d'information couplée à l'unité d'analyse et de filtrage d'information, et prévue pour générer un message chiffré en chiffrant le message filtré en fonction d'un signal de chiffrement ;
- un circuit à diode de données couplé à l'unité de chiffrement d'information, et comprenant une entrée de circuit et une sortie de circuit, le circuit à diode de données étant prévu pour transférer unidirectionnellement le message chiffré entre l'entrée de circuit et la sortie de circuit, le circuit à diode de données comprenant en outre une entrée de commande et des moyens d'activation pour empêcher ou permettre le passage du message chiffré entre l'entrée de circuit et la sortie de circuit en fonction d'un signal de commande reçu au niveau de l'entrée de commande;
- une unité d'émission de message couplée entre la sortie de circuit et la sortie de système, et prévue pour émettre un message d'appel comprenant le message chiffré ; et,
- un processeur couplé à l'unité d'analyse et de filtrage d'information, à l'unité de chiffrement d'information et au circuit, et prévu pour générer le signal de filtrage, le signal de chiffrement et le signal de commande.

Dans une première mise en œuvre, le circuit à diode de données comprend en outre un élément de diode de données ayant une unité de transmission prévue pour transmettre unidirectionnellement le message chiffré, les moyens d'activation étant prévus pour être actionnables entre une première position dans laquelle les moyens d'activation sont agencés de manière à interrompre l'alimentation de l'unité de transmission et dans une deuxième position dans laquelle les moyens d'activation sont agencés de manière à activer l'alimentation de l'unité de transmission.

Dans une deuxième mise en œuvre, l'unité d'analyse et de filtrage d'information est en outre prévue pour générer un premier signal de terminaison d'opération indicatif de l'achèvement des opérations de l'unité d'analyse et de filtrage d'information. En outre, l'unité de chiffrement d'information est en outre prévue pour générer un second signal de terminaison d'opération indicatif de l'achèvement des opérations de l'unité de chiffrement d'information. Enfin, le processeur est en outre prévu pour générer le signal de commande en réponse à la génération successive du premier signal de terminaison d'opération et du second signal de terminaison d'opération.

Dans une troisième mise en œuvre, le système comprend en outre,
- un port de mémoire couplé au processeur, et prévu pour recevoir une mémoire portable ; et,
- une mémoire portable apte à être reçue dans le port de mémoire et configurée pour mémoriser des données de filtrage et de données de chiffrement.

Dans ce cas, le processeur est en outre prévu pour configurer le signal de filtrage et le signal de chiffrement, à partir des données de filtrage et de données de chiffrement, respectivement.

Selon un exemple de la troisième mise en œuvre,
- la mémoire portable est en outre configurée pour mémoriser au moins une liste de contact comprenant au moins un numéro d'appel d'un dispositif mobile à contacter, chaque numéro d'appel étant associé à au moins une deuxième métadonnée relative au fonctionnement du premier système d'information,
- le processeur est en outre prévu pour inclure la liste de contact dans le signal de filtrage,
- l'unité d'analyse et de filtrage d'information est en outre prévue pour générer un message d'association associant le message filtré à au moins un numéro d'appel dont la au moins une deuxième métadonnée coïncide avec la première métadonnée,
- l'unité de chiffrement d'information est en outre prévue pour associer le message d'association à le message chiffré ; et,
- l'unité d'émission de message est en outre prévue pour émettre le message d'appel en fonction du message d'association.

Dans ce cas, de préférence, l'unité d'émission de message est en outre prévue pour générer et émettre un message de pulsation périodique pendant l'attente d'un message d'appel.

Avantageusement, l'unité d'émission de message est en outre prévue pour détruire le message d'appel suite à l'émission du message d'appel.

Dans un arrangement particulier, l'unité d'émission de message est configurée pour émettre le message d'appel en utilisant un protocole de messagerie choisi parmi au moins l'un des protocoles suivants : SMS, MMS, XMPP et SMTP.

Dans un autre arrangement particulier,
- l'unité d'analyse et de filtrage d'information, l'unité de chiffrement d'information et le processeur sont compris dans une première enceinte,
- le circuit à diode de données est compris dans une deuxième enceinte; et,
- l'unité d'émission de message est compris dans une troisième enceinte.

Dans ce cas, la première enceinte, la deuxième enceinte et la troisième enceinte sont géographiquement distinctes les unes des autres de sorte qu'aucun rayonnement électromagnétique ne puisse être capté d'une enceinte à une autre.

De manière avantageuse,
- l'unité d'analyse et de filtrage d'information, l'unité de chiffrement d'information, le processeur et l'unité d'émission de message sont compris dans une première enceinte ; et,
- le circuit à diode de données est compris dans une deuxième enceinte.

Dans ce cas, la première enceinte et la deuxième enceinte sont géographiquement distinctes les unes des autres de sorte qu'aucun rayonnement électromagnétique ne puisse être capté d'une enceinte à une autre.

Enfin, un deuxième objet de l'invention concerne un procédé de transmission d'au moins un message depuis un premier réseau d'un premier système d'information vers un second réseau d'un second système d'information, le premier réseau ayant une classification de sécurité supérieure à celle du second réseau, le message comprenant au moins une première métadonnée associée au fonctionnement du premier système d'information. En pratique, le procédé comprend les étapes suivantes :
- générer un message filtré en filtrant le message en fonction d'un signal de filtrage de sorte qu'au moins une information sensible associée à la au moins une première métadonnée est masquée;
- générer un message chiffré en chiffrant le message filtré en fonction d'un signal de chiffrement ;
- transférer unidirectionnellement le message chiffré du réseau sécurisé vers le réseau non sécurisé en fonction d'un signal de commande, seulement lorsque le filtrage et le chiffrage ont été réalisés.

### Brève description des dessins

Les caractéristiques et avantages de l'invention seront mieux compris à la lecture de la description qui va suivre et en référence aux dessins annexés, donnés à titre illustratif et nullement limitatif.
La figure 1 représente un exemple de mise en œuvre du système selon l'invention.
La figure 2 représente une mise en œuvre du circuit à diode de données selon l'invention.
La figure 3 représente un organigramme d'un procédé selon l'invention.

### Description des modes de réalisation

Dans le cadre de cette description, on entend par système d'information l'ensemble des moyens matériels, des moyens logiciels, des bases de données et des réseaux de communication pouvant être agencés pour fournir des produits ou des prestations de services dans un domaine dit critique.

En outre, on entend par domaine critique les systèmes d'information pour lesquels une panne peut avoir des conséquences dramatiques, comme la mort, les blessures graves, les dégâts matériels/économiques importants, ou des conséquences graves pour l'environnement. Ainsi, cette définition couvre, par exemple, les systèmes d'information de transport (par ex. pour le pilotage d'un avion, d'un train, d'une voiture, d'un bateau), les systèmes d'information d'énergie (par ex. pour le contrôle d'une centrale nucléaire), les systèmes d'information de santé (par ex. un dispositif médical) ou encore les systèmes d'information de télécommunication (par ex. un système de communication au sol d'un système de communication par satellite). Toutefois, n'importe quel système d'information conforme à la définition ci-dessus est aussi envisagé dans cette description.

Dans la description, on entend également par incident perturbateur, l'ensemble des événements liés à l'état en opération d'un système d'information tel que : la défaillance d'un composant de stockage, le défaut d'alimentation d'un moteur d'un dispositif, la chute de tension de commande d'une machine, la chute de la puissance (hydraulique, électrique, etc....) reçue par une machine, défaillance mécanique. Toutefois, on notera que l'invention ne porte pas sur la détection et le diagnostic d'un incident perturbateur. Dans le reste de la description, on considérera qu'un incident au niveau d'un système d'information a été détecté et diagnostiqué comme étant perturbateur. L'incident perturbateur est ensuite inclus dans un message à transmettre à un technicien de maintenance ou un expert technique.

Dans l'invention, une solution est proposée au problème de la protection d'un réseau sécurisé contre des cyberattaques lorsque le réseau sécurisé est amené à communiquer des informations depuis le réseau sécurisé vers un réseau public, par exemple par l'émission d'alertes et de notification à des opérateurs distants. En pratique, la solution est basée sur l'utilisation d'une diode de données (aussi connue sous le nom de diode réseau ou "data diode" en anglais) pour permettre la transmission unidirectionnelle des informations du réseau sécurisé vers un réseau public. Ceci a pour effet de rend impossible une attaque informatique du réseau sécurisé depuis le réseau public. Ainsi, cet agencement garantit une séparation physique entre le réseau sécurisé et le réseau public.

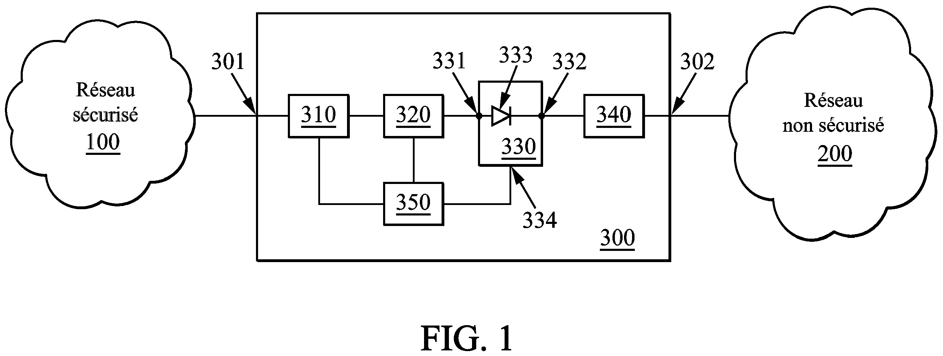

La figure 1 représente un système 300 selon l'invention. Dans l'exemple de la figure 1 le système 300 est disposé entre un réseau sécurisé 100 et un réseau non sécurisé 200. Le réseau sécurisé 100 est associé à un premier système d'information tandis que le réseau non sécurisé 200 est associé à un second système d'information différent du premier système d'information. De manière générale, le réseau sécurisé 100 est considéré comme plus sécurisé que le réseau non sécurisé 200 car il possède une classification de sécurité supérieure à celle du réseau non sécurisé 200.

Structurellement, le système 300 comprend une entrée de système 301 et une sortie de système 302. En outre, le système 300 comprend une unité d'analyse et de filtrage d'information 310, une unité de chiffrement d'information 320, un circuit à diode de données 330, une unité d'émission de message 340 et un processeur 350.

Dans l'exemple de la figure 1, l'entrée de système 301 est configurée pour être connectée au réseau sécurisé 100 tandis que la sortie de système 302 est configurée pour être connectée au réseau non sécurisé 200. Lorsque le système 300 est en opération, l'entrée de système 301 est prévue pour recevoir un message comprenant au moins une métadonnée associée au fonctionnement du premier système d'information.

On entend par message, un ensemble de signaux numériques mis sous une forme déterminée. Par exemple, le message reçu à l'entrée de système 301 peut être un message textuel selon le standard RFC5424 ou tout autre standard normalisé ou pas. Le message peut comprendre des éléments d'identification du message, d'horodatage de génération du message, d'identification de la source du message ou encore d'identification de l'événement ayant provoqué la génération du message. Toutefois, d'autres éléments peuvent être ajoutés au message à transmettre.

On entend ici par métadonnée toute information descriptive du fonctionnement du premier système d'information. Par exemple, dans le domaine du transport, il peut s'agir de données relatives à la défaillance d'un composant de stockage, à l'état de santé des moteurs ou encore la température d'une pièce ou d'un composant.

De retour à la figure 1, l'unité d'analyse et de filtrage d'information 310 est couplée à l'entrée de système 301. En opération, l'unité d'analyse et de filtrage d'information 310 est configurée pour générer un message filtré en filtrant le message reçu en fonction d'un signal de filtrage. Le signal de filtrage contient toutes les informations permettant à l'unité d'analyse et de filtrage d'information 310 de déterminer l'étendue des informations à filtrer. En pratique, l'unité d'analyse et de filtrage d'information 310 filtre la métadonnée du message reçue de l'entrée de système 301 de sorte qu'au moins une information sensible associée à la métadonnée est masquée. Ceci a pour effet d'empêcher la fuite d'informations sensibles du réseau sécurisé 100.

On entend par information sensible, une information ou une connaissance obtenue directement ou indirectement, qui si elle est révélée au public, nuirait au système d'information sur laquelle elle porte. En d'autres termes, il s'agit d'une information dont la divulgation, l'utilisation à mauvais escient, la modification ou l'accès non autorisé peut affecter défavorablement la sécurité du système d'information concerné. Par exemple, il peut s'agir d'une information associée à l'identification des serveurs informatiques du système d'information tel que les adresses IP, les noms des serveurs ou encore la taille des serveurs informatiques. En effet, de telles informations peuvent, par exemple, informer sur les capacités d'attaque ou de défense du système d'information. Dans ce cas, si l'information sensible tombe entre de mauvaises mains, cela pourrait affecter défavorablement la sécurité d'une organisation.

Dans une première en œuvre particulière de l'unité d'analyse et de filtrage d'information 310, le masquage est réalisé par la suppression de l'information sensible de la métadonnée. Par exemple, l'adresse IP d'un serveur ayant subi un incident perturbateur peut être supprimée de la métadonnée.

Dans une deuxième mise en œuvre de l'unité d'analyse et de filtrage d'information 310, le masquage est réalisé par le remplacement de l'information sensible de la métadonnée par une ou plusieurs informations non sensibles. Par exemple, le nom d'un serveur ayant subi un incident perturbateur peut être remplacé par un autre nom ou un sigle différent du véritable nom du serveur. Dans ce cas, le où les mots de remplacement doivent être connus de l'opérateur qui recevra le message. Une autre possibilité du même ordre peut consister à remplacer l'information sensible par une offuscation pour un encodage de l'information sensible.

Dans une troisième mise en œuvre de l'unité d'analyse et de filtrage d'information 310, le masquage est réalisé par une combinaison de suppression et de remplacement de l'information sensible. Ainsi, si une métadonnée comprend l'adresse IP et le nom d'un serveur ayant subi un incident perturbateur, les solutions de la première mise en œuvre et de la deuxième mise en œuvre peuvent être utilisées conjointement. Par exemple, l'adresse IP peut être remplacée par un sigle et le nom du serveur peut être supprimé de la métadonnée.

Toujours dans la figure 1, l'unité de chiffrement d'information 320 est couplée à l'unité d'analyse et de filtrage d'information 310. En opération, l'unité de chiffrement d'information 320 est configurée pour générer un message chiffré en chiffrant le message filtré en fonction d'un signal de chiffrement. Le signal de chiffrement contient toutes les informations permettant à l'unité de chiffrement d'information 320 de chiffrer l'infirmation filtrée. En pratique, le chiffrement peut se faire à l'aide de tous moyens de chiffrement connu de l'homme de l'art, notamment par l'utilisation d'un algorithme symétrique ou asymétrique. Ceci a pour effet d'empêcher l'interception des messages de notification émis depuis le réseau sécurisé 100.

De nouveau dans la figure 1, le circuit à diode de données 330 est couplé à l'unité de chiffrement d'information 320. Le circuit à diode de données 330 comprend une entrée de circuit 331, une sortie de circuit 332 est un élément de diode de données 333. En opération, l'élément de diode de données 333 est configuré pour transférer unidirectionnellement le message chiffré entre l'entrée de circuit 331 et la sortie de circuit 332. En effet, l'élément de diode de données 333 qui est également connu sous le nom de diode réseau est un système qui permet d'interconnecter deux réseaux informatiques en autorisant le transfert de données dans un seul sens. Ce type de système est généralement employé pour relier un réseau nécessitant un niveau de sécurité élevée à un réseau de confiance moindre (par exemple Internet). Dans ce cas, seule la remontée d'information du réseau de confiance moindre est autorisée afin de garantir la confidentialité du réseau sécurisé en évitant les fuites d'informations sensibles. Toutefois, dans le cadre de l'invention il est envisagé d'utiliser l'élément de diode de données 333 dans le sens inverse de sorte que seule la remontée d'information du réseau sécurisé est possible. Ceci a pour effet qu'il est impossible de mettre en œuvre des attaques informatiques depuis l'extérieur du réseau sécurisé, car il n'y a qu'une seule voie de communication depuis le réseau sécurisé vers le réseau de confiance moindre et pas dans l'autre sens.

En outre dans la figure 1, le circuit à diode de données 330 comprend une entrée de commande 335 et des moyens d'activation 334 pour empêcher ou permettre le passage du message chiffré entre l'entrée de circuit 331 et la sortie de circuit 332 en fonction d'un signal de commande reçu au niveau de l'entrée de commande 335. Les moyens d'activation 334 sont prévus pour être actionnables entre une première position dans laquelle les moyens d'activation 334 empêchent le passage du message chiffré, et une deuxième position dans laquelle les moyens d'activation 334 permettent le passage de l'information. Enfin, les moyens d'activation 334 sont normalement actionnés dans la première position.

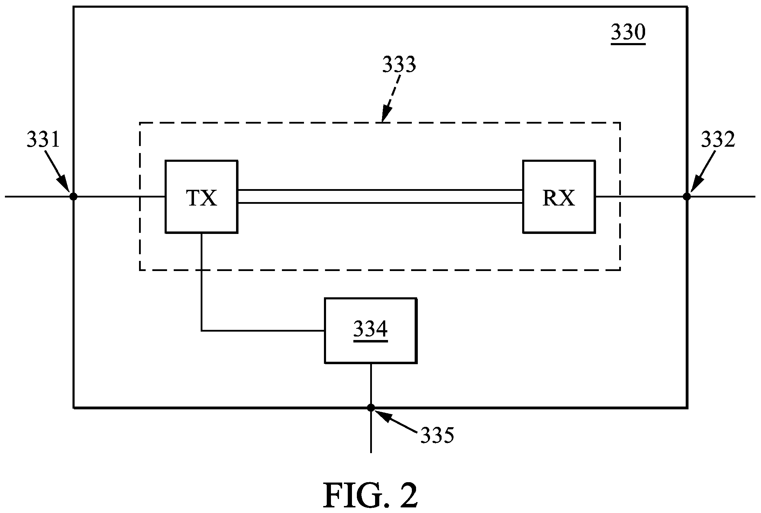

Dans la figure 2, il est représenté une mise en œuvre particulière du circuit à diode de données 330 selon l'invention. Dans l'exemple de la figure 2, l'élément de diode de données 333 du circuit à diode de données 330 comprend un élément de transmission TX et un élément de réception RX, tous deux prévus en combinaison pour transmettre unidirectionnellement le message chiffré entre l'élément de transmission TX et l'élément de réception RX. Dans un exemple, l'élément de diode de données 333 est réalisé sur la base d'une fibre optique ne comprenant qu'un seul brin. Dans ce cas, l'élément de transmission TX peut être une source de lumière prévue pour émettre un flux de lumière dans la fibre optique et l'élément de réception RX peut être un photo-récepteur prévu pour recevoir le flux de lumière. Toutefois d'autres mises en œuvre de liaison réseau unidirectionnelle peuvent également être utilisées avec l'invention. Par exemple, il est également envisagé l'utilisation d'une liaison série RS-232 partielle ou encore une liaison Ethernet RJ45 partielle avec des éléments de transmission et réception correspondant.

Dans une mise en œuvre particulière de la figure 2, les moyens d'activation 334 sont actionnés dans la première position en commandant l'interruption de l'alimentation de l'élément de transmission TX tandis que les moyens d'activation 334 sont actionnés dans la deuxième position en commandant l'activation de l'alimentation de l'élément de transmission TX. Pour cela, les moyens d'activation 334 peuvent être directement connectés à l'alimentation de l'élément de transmission TX.

De retour à la figure 1, l'unité d'émission de message 340 est couplée entre la sortie de circuit 332 et la sortie de système 302. En opération, l'unité d'émission de message 340 est configurée pour émettre un message d'appel comprenant le message chiffré. Dans une mise en œuvre particulière, l'unité d'émission de message 340 est configurée pour émettre le message d'appel en utilisant un protocole de messagerie choisie parmi au moins l'un des protocoles suivants : SMS, E-mail, MMS, XMPP .... Ainsi, pour une meilleure sécurité, aucune copie du message émis n'est conservée au niveau du système 300.

Dans une mise en œuvre particulière, l'unité d'émission de message 340 est prévue pour détruire le message d'appel suite à l'émission du message d'appel.

Dans un exemple de la mise en œuvre précédente, l'unité d'émission de message 340 est prévue pour recevoir un message d'acquittement en réponse à l'émission du message d'appel et pour détruire le message d'appel en réponse à la réception du message d'acquittement.

Dans une autre mise en œuvre particulière, l'unité d'émission de message 340 est en outre prévue pour générer et émettre un message de pulsation périodique (en anglais, "heartbeat message" ou "keep alive message") pendant l'attente d'un message d'appel. Le message de pulsation est prévu pour indiquer au destinataire du message que le système 300 est encore en cours d'exécution. En d'autres termes, le message de pulsation périodique permet d'indiquer au destinataire du message que le système 300 est toujours en activité. Dans un exemple, la période de génération et d'émission du message de pulsation peut être fixée à toutes les minutes, toutes les demi-heures ou toutes les heures. Dans une mise en œuvre particulière, le message de pulsation périodique est chiffré et agencé de sorte qu'il n'est pas possible de l'intercepter et ainsi de pouvoir simuler la présence du système 300 en rejouant une séquence de transmission du message de pulsation périodique déjà utilisée.

Enfin, dans la figure 1, le processeur 350 est couplé à l'unité d'analyse et de filtrage d'information 310, à l'unité de chiffrement d'information 320 et au circuit à diode de données 330. En opération, le processeur 350 est configuré pour générer le signal de filtrage, le signal de chiffrement et le signal de commande.

Dans une première mise en œuvre du processeur 350, l'ensemble des informations permettant de configurer le signal de filtrage, le signal de chiffrement et le signal de commande sont compris dans une mémoire du processeur 350. Dans ce cas, c'est le processeur 350 qui ordonnance la génération des signaux de filtrage de chiffrement et de commande. Dans le cadre de cette mise en œuvre particulière, il est entendu que le signal de filtrage est généré avant le signal de chiffrement de sorte à générer le signal de commande actionnant les moyens d'activation 334 dans la deuxième position que lorsque les opérations de masquage et de filtrage ont été réalisées. Par exemple, le processeur 350 peut générer le signal de chiffrement, d'une part, et le signal de commande d'autre part, après une temporisation prédéterminée suivant la génération du signal de filtrage, d'une part, et du signal de chiffrement d'autre part. De cette manière, il peut être garanti que l'information transmise a été préalablement filtrée de toute information sensible et chiffrée.

Dans une deuxième mise en œuvre du processeur 350, la génération du signal de commande est conditionnée par l'exécution des opérations de l'unité d'analyse et de filtrage d'information 310 puis de l'unité de chiffrement d'information 320. En pratique, l'unité d'analyse et de filtrage d'information 310 est en outre prévue pour générer un premier signal de terminaison d'opération indicatif de l'achèvement des opérations de l'unité d'analyse et de filtrage d'information 310. Il en est de même pour l'unité de chiffrement d'information 320 qui est également prévue pour générer un second signal de terminaison d'opération indicatif de l'achèvement des opérations de l'unité de chiffrement d'information 320. Enfin, le processeur 350 est en outre prévu pour générer le signal de commande en réponse à la génération du premier signal de terminaison d'opération et du second signal de terminaison d'opération. Dans le cadre de cette mise en œuvre particulière, il est entendu que le premier signal de terminaison d'opération est généré avant le second signal de terminaison d'opération de sorte à générer le signal de commande actionnant les moyens d'activation 334 dans la deuxième position que lorsque les opérations de masquage et de filtrage ont été réalisées. De cette manière, il peut être garanti que l'information transmise a été préalablement filtrée de toute information sensible et chiffrée.

Dans une autre mise en œuvre particulière du système 300, on incorpore un port de mémoire et une mémoire portable. Dans cette mise en œuvre, le port de mémoire est couplé au processeur 350 et configuré pour recevoir la mémoire portable. En outre, la mémoire portable est configurée pour mémoriser des données de filtrage et des données de chiffrement. Enfin, le processeur 350 est adapté pour configurer, respectivement, le signal de filtrage et le signal de chiffrement à partir des données de filtrage et de données de chiffrement. Ainsi, dans cette mise en œuvre particulière, les données permettant de configurer le signal de filtrage, le signal de chiffrement sont obtenues à partir de la mémoire portable. Ceci offre la possibilité aux propriétaires du système d'information sécurisée 100 de déterminer la manière dont le filtrage et le chiffrement doivent être réalisés.

Dans un exemple de cette mise en œuvre particulière du système 300, la mémoire portable peut également être configurée pour mémoriser des données de commande utilisable par le processeur 350 pour configurer le signal de commande.

Dans un exemple de la mise en œuvre précédente, la mémoire portable est en outre configurée pour mémoriser au moins une liste de contact comprenant au moins numéro d'appel d'un dispositif mobile ou fixe à contacter. Dans cet exemple, chaque numéro d'appel est associé à au moins une deuxième métadonnée relative au fonctionnement du réseau sécurisé 100. En outre, le processeur 350 est également prévu pour inclure la liste de contact dans le signal de filtrage. Par ailleurs, l'unité d'analyse et de filtrage d'information 310 est également configurée pour générer un message d'association associant le message filtré à au moins un numéro d'appel dont la deuxième métadonnée coïncident avec la première métadonnée. Cet agencement a pour effet de permettre la notification de l'occurrence d'un incident à un ou plusieurs techniciens les plus appropriés pour résoudre l'incident.

On dira que la première métadonnée et la deuxième métadonnée coïncident lorsqu'elles comprennent toutes deux une information relative au même incident perturbateur du réseau sécurisé 100. Par exemple, si la première métadonnée peut comprendre une information indiquant qu'une défaillance d'un composant de stockage a lieu, alors une deuxième métadonnée qui coïncide avec la première métadonnée comprend également une information relative à la défaillance d'un composant de stockage. En pratique, comme chaque numéro d'appel est associé à un technicien spécialiste d'un ou de plusieurs incidents perturbateur du réseau sécurisé 100, alors, la mise en coïncidence selon l'invention a pour objectif de limiter la liste d'appel aux seuls numéros associés aux techniciens spécialistes de l'incident perturbateur qui s'est produit.

Dans une mise en œuvre particulière, on pourra envisager la mise en place d'une table de coïncidence permettant d'associer une spécialité technique à un incident perturbateur. Par exemple, toutes les défaillances du premier système d'information qui sont liées à la mécanique peuvent être mises en coïncidence avec la spécialité technique d'un mécanicien. Ainsi, grâce à la table de coïncidence et la liste de contact, l'unité d'analyse et de filtrage d'information 310 est capable de déterminer le ou les numéros d'appel pertinents qui sont associés à l'occurrence d'un incident perturbateur particulier en faisant coïncider le l'incident perturbateur à une spécialité technique particulière. En pratique, on peut envisager de stocker la table de coïncidence dans une mémoire de l'unité d'analyse et de filtrage d'information 310 ou encore dans le processeur 350.

Dans un autre exemple de la mise en œuvre précédente, on peut envisager d'externaliser la fonctionnalité permettant de déterminer le ou les numéros d'appel pertinents qui sont associés à l'occurrence d'un incident perturbateur particulier, dans une unité distincte de l'unité d'analyse et de filtrage d'information 310. Par exemple, une unité de routage couplée à l'unité d'analyse peut être utilisée. Dans ce cas, l'unité de routage peut comprendre une mémoire ainsi qu'un processeur. La mémoire peut alors comprendre inclure la liste de contact et la table de coïncidence, tous deux mentionnés ci-dessus. Dans cet exemple particulier, l'unité d'analyse et de filtrage d'information 310 est configurée pour fournir la deuxième métadonnée relative au fonctionnement du réseau sécurisé 100 à l'unité de routage. Par la suite, l'unité de routage est configurée pour déterminer et retourner à l'unité d'analyse et de filtrage d'information 310, au moins un numéro d'appel dont la deuxième métadonnée coïncident avec la première métadonnée. En outre, l'unité de routage est également configurée pour déterminer et retourner à l'unité d'analyse et de filtrage d'information 310, le ou les numéros d'appel pertinents qui sont associés à l'occurrence d'un incident perturbateur particulier en faisant coïncider le l'incident perturbateur à une spécialité technique particulière.

Par la suite, l'unité de chiffrement d'information 320 est également configurée pour associer le message d'association au message chiffré. Enfin, l'unité d'émission de message 340 est également configurée pour émettre le message d'appel en fonction du message d'association. Dans un autre exemple de cette mise en œuvre, on peut envisager d'inclure la liste de contact dans une mémoire du processeur 350.

Dans une mise œuvre de l'invention, on peut envisager d'agencer physiquement les différents éléments du système 300 selon plusieurs arrangements.

Par exemple, dans un premier arrangement, on regroupe dans une première enceinte l'unité d'analyse et de filtrage d'information 310, l'unité de chiffrement d'information 320 et le processeur 350. Ensuite, on inclut le circuit à diode de données dans une deuxième enceinte distincte de la première enceinte. Enfin, on positionne l'unité d'émission de message 340 dans une troisième enceinte distincte de la première enceinte et de la deuxième enceinte. Dans cet arrangement, la première enceinte, la deuxième enceinte et la troisième enceinte peuvent être géographiquement distinctes les unes de autres de sorte qu'aucun rayonnement électromagnétique ne puisse être capté d'une enceinte à une autre.

Dans un second arrangement on regroupe dans une première enceinte l'unité d'analyse et de filtrage d'information 310, l'unité de chiffrement d'information 320, le processeur 350 est l'unité d'émission de message 340. Ensuite, on positionne le circuit à diode de données 330 dans une deuxième enceinte distincte de la première enceinte. Dans cet arrangement, la première enceinte et la deuxième enceinte sont géographiquement distinctes les unes des autres de sorte qu'aucun rayonnement électromagnétique ne puisse être capté d'une enceinte à une autre.

Dans la description, il a été considéré que les informations transmises du réseau sécurisé 100 vers le réseau sécurisé 200 étaient liées à un dysfonctionnement du premier système d'information. Ceci a pour effet de permettre la mise en place de la maintenance corrective sous astreinte à distance du premier système d'information via un réseau public. Toutefois, grâce à l'invention, des informations qui ne sont pas nécessairement liées à un dysfonctionnement du premier système d'information peuvent également être transmises à l'extérieur de ce système. Dans ce cas, l'unité d'analyse et de filtrage d'information 310 devra être configurée pour laisser passer les informations correspondantes. Ceci aura pour effet de permettre la mise en place d'une supervision à distance du premier système d'information.

L'invention concerne également un émetteur (non représenté) d'un système de communication de type filaire ou sans fil comprenant le système 300 tel que décrit plus haut. Un tel émetteur permet l'établissement d'une communication unidirectionnelle cryptée à travers un réseau de communication quelconque, et notamment un réseau public.

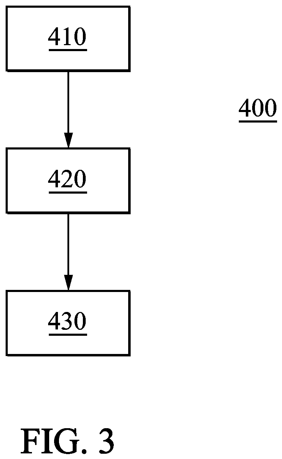

L'invention concerne aussi un procédé 400 pour la transmission d'au moins une première métadonnée depuis le réseau sécurisé 100 vers le réseau non sécurisé 200 selon les aspects techniques décrits ci-dessus. Dans la figure 3, le procédé 400 comprend les étapes suivantes consistant à :
- générer un message filtré 410 en filtrant la première métadonnée en fonction du signal de filtrage tel que décrit plus haut, de sorte qu'au moins une information sensible associée à la première métadonnée est masquée;
- générer un message chiffré 420 en chiffrant le message filtré en fonction du signal de chiffrement tel que décrit plus haut ;
- transférer unidirectionnellement 430 le message chiffré du réseau sécurisé 100 vers le réseau non sécurisé 200, de manière conditionnelle, en commandant le passage du message chiffré en fonction du signal de commande tel que décrit plus haut.

L'invention décrite apporte une solution au problème de la protection d'un réseau sécurisé contre des cyberattaques lorsque le réseau sécurisé est amené à communiquer des informations depuis le réseau sécurisé vers un réseau public. En effet, dans son ensemble, le système selon l'invention peut difficilement être compromis par une cyberattaque. Plus précisément, seule l'unité d'émission de message est susceptible d'être compromis ou endommagé par une telle attaque. Toutefois, comme cette unité se trouve positionnée en aval de la limite de sécurité physique du système (c-à-d après le circuit à diode de données), alors sa perte n'a pas d'impact sur la sécurité globale du réseau sécurisé. Ainsi, l'adjonction d'un système selon l'invention à un système d'information existant ne fournit pas d'opportunité pour la mise en œuvre de cyberattaque à l'encontre du réseau de ce système d'information. En outre, grâce à l'utilisation d'un circuit à diode de données commandée, il est également garanti qu'aucune information sensible ne puisse fuiter du réseau sécurisé via le système selon l'invention. On peut également utiliser la notion de "thyristor de données". En effet, comme un thyristor permet la conduction unidirectionnelle du courant grâce au commandement d'une gâchette, le "thyristor de données" permet la transmission unidirectionnelle d'un message après que le message à émettre ait été nettoyé des informations sensibles, puis chiffré. Dans ce cas, le message fait office de courant, tandis que et l'information de confirmation du nettoyage et le chiffrement du message font offices de gâchette du thyristor.

## Revendications

1. Système de communication (300) pour la transmission d'au moins un message depuis un premier réseau (100) d'un premier système d'information vers un second réseau (200) d'un second système d'information, le premier réseau (100) ayant une classification de sécurité supérieure à celle du second réseau, le système (300) comprenant
- une entrée de système (301) apte à être connectée au premier réseau, et prévue pour recevoir le message, le message comprenant au moins une première métadonnée associée au fonctionnement du premier système d'information;
- une sortie de système (302) apte à être connectée au second réseau ;
- une unité d'analyse et de filtrage d'information (310) couplée à l'entrée de système, et prévue pour générer un message filtré en filtrant le message en fonction d'un signal de filtrage de sorte qu'au moins une information sensible associée à la au moins une première métadonnée est masquée;
- une unité de chiffrement d'information (320) couplée à l'unité d'analyse et de filtrage d'information, et prévue pour générer un message chiffré en chiffrant le message filtré en fonction d'un signal de chiffrement ;
- un circuit à diode de données (330) couplé à l'unité de chiffrement d'information (320), et comprenant une entrée de circuit (331) et une sortie de circuit (332), le circuit à diode de données (330) étant prévu pour transférer unidirectionnellement le message chiffré entre l'entrée de circuit (331) et la sortie de circuit (332), le circuit à diode de données comprenant en outre une entrée de commande (335) et des moyens d'activation (334) pour empêcher ou permettre le passage du message chiffré entre l'entrée de circuit (331) et la sortie de circuit (332) en fonction d'un signal de commande reçu au niveau de l'entrée de commande (335);
- une unité d'émission de message (340) couplée entre la sortie de circuit (332) et la sortie de système (302), et prévue pour émettre un message d'appel comprenant le message chiffré ; et,
- un processeur (350) couplé à l'unité d'analyse et de filtrage d'information (310), à l'unité de chiffrement d'information (320) et au circuit (330), et prévu pour générer le signal de filtrage, le signal de chiffrement et le signal de commande.

2. Système selon la revendication 1 dans lequel, le circuit à diode de données comprend en outre un élément de diode de données (333) ayant une unité de transmission prévue pour transmettre unidirectionnellement le message chiffré, les moyens d'activation (334) étant prévus pour être actionnables entre une première position dans laquelle les moyens d'activation (334) sont agencés de manière à interrompre l'alimentation de l'unité de transmission et dans une deuxième position dans laquelle les moyens d'activation (334) sont agencés de manière à activer l'alimentation de l'unité de transmission.

3. Système selon l'une quelconque des revendications 1 ou 2 dans lequel,
- l'unité d'analyse et de filtrage d'information (310) est en outre prévue pour générer un premier signal de terminaison d'opération indicatif de l'achèvement des opérations de l'unité d'analyse et de filtrage d'information (310) ;
- l'unité de chiffrement d'information (320) est en outre prévue pour générer un second signal de terminaison d'opération indicatif de l'achèvement des opérations de l'unité de chiffrement d'information (320) ; et,
- le processeur (350) est en outre prévu pour générer le signal de commande en réponse à la génération successive du premier signal de terminaison d'opération et du second signal de terminaison d'opération.

4. Système selon l'une quelconque des revendications 1, 2 ou 3 comprenant en outre,
- un port de mémoire couplé au processeur, et prévu pour recevoir une mémoire portable ; et,
- une mémoire portable apte à être reçue dans le port de mémoire et configurée pour mémoriser des données de filtrage et de données de chiffrement ;
dans lequel le processeur est en outre prévu pour configurer le signal de filtrage et le signal de chiffrement, à partir des données de filtrage et de données de chiffrement, respectivement.

5. Système selon la revendication 4 dans lequel,
- la mémoire portable est en outre configurée pour mémoriser au moins une liste de contact comprenant au moins un numéro d'appel d'un dispositif mobile à contacter, chaque numéro d'appel étant associé à au moins une deuxième métadonnée relative au fonctionnement du premier système d'information,
- le processeur est en outre prévu pour inclure la liste de contact dans le signal de filtrage,
- l'unité d'analyse et de filtrage d'information est en outre prévue pour générer un message d'association associant le message filtré à au moins un numéro d'appel dont la au moins une deuxième métadonnée coïncide avec la première métadonnée,
- l'unité de chiffrement d'information est en outre prévue pour associer le message d'association à le message chiffré ; et,
- l'unité d'émission de message est en outre prévue pour émettre le message d'appel en fonction du message d'association.

6. Système selon la revendication 5 dans lequel l'unité d'émission de message est en outre prévue pour générer et émettre un message de pulsation périodique pendant l'attente d'un message d'appel.

7. Système selon l'une quelconque des revendications 1, 2, 3, 4, 5 ou 6 dans lequel l'unité d'émission de message est en outre prévue pour détruire le message d'appel suite à l'émission du message d'appel.

8. Système selon l'une quelconque des revendications 1, 2, 3, 4, 5, 6 ou 7 dans lequel l'unité d'émission de message est configurée pour émettre le message d'appel en utilisant un protocole de messagerie choisi parmi au moins l'un des protocoles suivants : SMS, MMS, XMPP et SMTP.

9. Système selon l'une quelconque des revendications 1, 2, 3, 4, 5, 6, 7 ou 8 dans lequel,
- l'unité d'analyse et de filtrage d'information, l'unité de chiffrement d'information et le processeur sont compris dans une première enceinte,
- le circuit à diode de données est compris dans une deuxième enceinte; et,
- l'unité d'émission de message est compris dans une troisième enceinte;
dans lequel, la première enceinte, la deuxième enceinte et la troisième enceinte sont géographiquement distinctes les unes des autres de sorte qu'aucun rayonnement électromagnétique ne puisse être capté d'une enceinte à une autre.

10. Système selon l'une quelconque des revendications 1, 2, 3, 4, 5, 6, 7, 8 ou 9 dans lequel,
- l'unité d'analyse et de filtrage d'information, l'unité de chiffrement d'information, le processeur et l'unité d'émission de message sont compris dans une première enceinte ; et,
- le circuit à diode de données est compris dans une deuxième enceinte ;
dans lequel, la première enceinte et la deuxième enceinte sont géographiquement distinctes les unes des autres de sorte qu'aucun rayonnement électromagnétique ne puisse être capté d'une enceinte à une autre.

11. Procédé (400) de transmission d'au moins un message depuis un premier réseau (100) d'un premier système d'information vers un second réseau (200) d'un second système d'information, le premier réseau (100) ayant une classification de sécurité supérieure à celle du second réseau, le message comprenant au moins une première métadonnée associée au fonctionnement du premier système d'information, le procédé comprenant les étapes suivantes :
- générer (410) un message filtré en filtrant le message en fonction d'un signal de filtrage de sorte qu'au moins une information sensible associée à la au moins une première métadonnée est masquée;
- générer (420) un message chiffré en chiffrant le message filtré en fonction d'un signal de chiffrement ;
- transférer unidirectionnellement (430), par un circuit à diode de données, le message chiffré du réseau sécurisé (100) vers le réseau non sécurisé (200) en fonction d'un signal de commande, seulement lorsque le filtrage et le chiffrage ont été réalisés.

## Patentansprüche

1. Kommunikationssystem (300) zur Übertragung wenigstens einer Nachricht von einem ersten Netz (100) eines ersten Informationssystems zu einem zweiten Netz (200) eines zweiten Informationssystems, wobei das erste Netz (100) eine Sicherheitsklassifikation hat, die höher als diejenige des zweiten Netzes ist, wobei das System (300) umfasst:
- einen Systemeingang (301), der mit dem ersten Netz verbindbar ist und dafür vorgesehen ist, die Nachricht zu empfangen, wobei die Nachricht wenigstens ein erstes Metadatum umfasst, das der Funktionsweise des ersten Informationssystems zugeordnet ist;
- einen Systemausgang (302), der mit dem zweiten Netz verbindbar ist;
- eine Informationsanalyse- und -filtereinheit (310), die mit dem Systemeingang gekoppelt ist und dafür vorgesehen ist, durch Filtern der Nachricht in Abhängigkeit von einem Filtersignal eine gefilterte Nachricht zu erzeugen, so dass wenigstens eine sensible Information, die dem wenigstens einen ersten Metadatum zugeordnet ist, maskiert wird;
- eine Informationsverschlüsselungseinheit (320), die mit der Informationsanalyse- und - filtereinheit gekoppelt ist und dafür vorgesehen ist, durch Verschlüsseln der gefilterten Nachricht in Abhängigkeit von einem Verschlüsselungssignal eine verschlüsselte Nachricht zu erzeugen;
- eine Datendiodenschaltung (330), die mit der Informationsverschlüsselungseinheit (320) gekoppelt ist und einen Schaltungseingang (331) und einen Schaltungsausgang (332) umfasst, wobei die Datendiodenschaltung (330) dafür vorgesehen ist, die verschlüsselte Nachricht unidirektional zwischen dem Schaltungseingang (331) und dem Schaltungsausgang (332) zu übertragen, wobei die Datendiodenschaltung außerdem einen Steuereingang (335) und Aktivierungsmittel (334) zum Verhindern oder Ermöglichen des Durchlaufs der verschlüsselten Nachricht zwischen dem Schaltungseingang (331) und dem Schaltungsausgang (332) in Abhängigkeit von einem am Steuereingang (335) empfangenen Steuersignal umfasst;
- eine Nachrichtensendeeinheit (340), die zwischen den Schaltungsausgang (332) und den Systemausgang (302) geschaltet ist und dafür vorgesehen ist, eine Rufnachricht auszusenden, welche die verschlüsselte Nachricht umfasst; und
- einen Prozessor (350), der mit der Informationsanalyse- und -filtereinheit (310), mit der Informationsverschlüsselungseinheit (320) und mit der Schaltung (330) gekoppelt ist und dafür vorgesehen ist, das Filtersignal, das Verschlüsselungssignal und das Steuersignal zu erzeugen.

2. System nach Anspruch 1, wobei die Datendiodenschaltung außerdem ein Datendiodenelement (333) umfasst, das eine Übertragungseinheit aufweist, die dafür vorgesehen ist, die verschlüsselte Nachricht unidirektional zu übertragen, wobei die Aktivierungsmittel (334) dafür vorgesehen sind, zwischen einer ersten Position, in welcher die Aktivierungsmittel (334) so eingerichtet sind, dass sie die Versorgung der Übertragungseinheit unterbrechen, und einer zweiten Position, in welcher die Aktivierungsmittel (334) so eingerichtet sind, dass sie die Versorgung der Übertragungseinheit aktivieren, betätigbar zu sein.

3. System nach einem der Ansprüche 1 oder 2, wobei
- die Informationsanalyse- und -filtereinheit (310) außerdem dafür vorgesehen ist, ein erstes Operationsbeendigungssignal zu erzeugen, das für den Abschluss der Operationen der Informationsanalyse- und -filtereinheit (310) indikativ ist;
- die Informationsverschlüsselungseinheit (320) außerdem dafür vorgesehen ist, ein zweites Operationsbeendigungssignal zu erzeugen, das für den Abschluss der Operationen der Informationsverschlüsselungseinheit (320) indikativ ist; und
- der Prozessor (350) außerdem dafür vorgesehen ist, in Reaktion auf die aufeinander folgende Erzeugung des ersten Operationsbeendigungssignals und des zweiten Operationsbeendigungssignals das Steuersignal zu erzeugen.

4. System nach einem der Ansprüche 1, 2 oder 3, welches außerdem umfasst:
- einen Speicheranschluss, der mit dem Prozessor gekoppelt ist und dafür vorgesehen ist, einen tragbaren Speicher aufzunehmen; und
- einen tragbaren Speicher, der in dem Speicheranschluss aufgenommen werden kann und dafür ausgelegt ist, Filterungsdaten und Verschlüsselungsdaten zu speichern;
wobei der Prozessor außerdem dafür vorgesehen ist, das Filtersignal und das Verschlüsselungssignal anhand der Filterungsdaten bzw. der Verschlüsselungsdaten zu konfigurieren.

5. System nach Anspruch 4, wobei
- der tragbare Speicher außerdem dafür ausgelegt ist, wenigstens eine Kontaktliste zu speichern, die wenigstens eine Rufnummer einer zu kontaktierenden mobilen Vorrichtung umfasst, wobei jede Rufnummer wenigstens einem zweiten Metadatum zugeordnet ist, das sich auf die Funktionsweise des ersten Informationssystems bezieht,
- der Prozessor außerdem dafür vorgesehen ist, die Kontaktliste in das Filtersignal zu integrieren,
- die Informationsanalyse- und -filtereinheit außerdem dafür vorgesehen ist, eine Zuordnungsnachricht zu erzeugen, welche die gefilterte Nachricht wenigstens einer Rufnummer zuordnet, von der das wenigstens eine zweite Metadatum mit dem ersten Metadatum zusammenfällt,
- die Informationsverschlüsselungseinheit außerdem dafür vorgesehen ist, die Zuordnungsnachricht der verschlüsselten Nachricht zuzuordnen; und
- die Nachrichtensendeeinheit außerdem dafür vorgesehen ist, die Rufnachricht in Abhängigkeit von der Zuordnungsnachricht zu senden.

6. System nach Anspruch 5, wobei die Nachrichtensendeeinheit außerdem dafür vorgesehen ist, während des Wartens auf eine Rufnachricht eine Nachricht mit periodischer Pulsation zu erzeugen und zu senden.

7. System nach einem der Ansprüche 1, 2, 3, 4, 5 oder 6, wobei die Nachrichtensendeeinheit außerdem dafür vorgesehen ist, die Rufnachricht im Anschluss an das Senden der Rufnachricht zu vernichten.

8. System nach einem der Ansprüche 1, 2, 3, 4, 5, 6 oder 7, wobei die Nachrichtensendeeinheit dafür ausgelegt ist, die Rufnachricht unter Verwendung eines Nachrichtenprotokolls zu senden, das aus wenigstens einem der folgenden Protokolle ausgewählt ist: SMS, MMS, XMPP und SMTP.

9. System nach einem der Ansprüche 1, 2, 3, 4, 5, 6, 7 oder 8, wobei
- die Informationsanalyse- und -filtereinheit, die Informationsverschlüsselungseinheit und der Prozessor in einer ersten Hülle enthalten sind;
- die Datendiodenschaltung in einer zweiten Hülle enthalten ist; und
- die Nachrichtensendeeinheit in einer dritten Hülle enthalten ist;
wobei die erste Hülle, die zweite Hülle und die dritte Hülle geografisch voneinander getrennt sind, so dass keine elektromagnetische Strahlung aus einer Hülle in eine andere gelangen kann.

10. System nach einem der Ansprüche 1, 2, 3, 4, 5, 6, 7, 8 oder 9, wobei
- die Informationsanalyse- und -filtereinheit, die Informationsverschlüsselungseinheit, der Prozessor und die Nachrichtensendeeinheit in einer ersten Hülle enthalten sind; und
- die Datendiodenschaltung in einer zweiten Hülle enthalten ist;
wobei die erste Hülle und die zweite Hülle geografisch voneinander getrennt sind, so dass keine elektromagnetische Strahlung aus einer Hülle in eine andere gelangen kann.

11. Verfahren (400) zur Übertragung wenigstens einer Nachricht von einem ersten Netz (100) eines ersten Informationssystems zu einem zweiten Netz (200) eines zweiten Informationssystems, wobei das erste Netz (100) eine Sicherheitsklassifikation hat, die höher als diejenige des zweiten Netzes ist, wobei die Nachricht wenigstens ein erstes Metadatum umfasst, das der Funktionsweise des ersten Informationssystems zugeordnet ist, wobei das Verfahren die folgenden Schritte umfasst:
- Erzeugen (410) einer gefilterten Nachricht durch Filtern der Nachricht in Abhängigkeit von einem Filtersignal, so dass wenigstens eine sensible Information, die dem wenigstens einen ersten Metadatum zugeordnet ist, maskiert wird;
- Erzeugen (420) einer verschlüsselten Nachricht durch Verschlüsseln der gefilterten Nachricht in Abhängigkeit von einem Verschlüsselungssignal;
- unidirektionales Übertragen (430), durch eine Datendiodenschaltung, der verschlüsselten Nachricht von dem sicheren Netz (100) zu dem nicht sicheren Netz (200) in Abhängigkeit von einem Steuersignal nur dann, wenn die Filterung und die Verschlüsselung durchgeführt worden sind.

## Claims

1. A communication system (300) for transmission of at least one message from a first network (100) of a first information system towards a second network (200) of a second information system, where the first network (100) has a higher security classification than the second network, the system (300) comprising:
- a system input (301) connectable to the first network and intended for receiving the message, where the message comprises at least one first metadata related to the operation of the first information system;
- a system output (302) connectable to the second network;
- an information analysis and filtering unit (310) coupled to the system input and intended for generating a filtered message by filtering the message depending on a filtering signal such that at least one sensitive information related to the at least one first metadata is masked;
- an information encryption unit (320) coupled with the information analysis and filtering unit, and intended to generate an encrypted message by encrypting the filtered message depending on an encryption signal;
- a data diode circuit (330) coupled to the information encryption unit (320), and comprising a circuit input (331) and a circuit output (332), where the data diode circuit (330) is intended to unidirectionally transfer the encrypted message between the circuit input (331) and the circuit output (332), and where the data diode circuit further comprises a command input (335) and activation means (334) for blocking or allowing the passage of the encrypted message between the circuit input (331) and the circuit output (332) depending on a command signal received at the command input (335);
- a message sending unit (340) coupled between the circuit output (332) and the system output (302) and intended to send a call message comprising the encrypted message; and
- a processor (350) coupled to the information analysis and filtering unit (310), the information encryption unit (320) and the circuit (330), and intended to generate the filtering signal, the encryption signal and the command signal.

2. The system according to claim 1 wherein, the data diode circuit further comprises a data diode element (333) having a transmission unit intended to send the encrypted message unidirectionally, where the activation means (334) are intended to be actuatable between a first position in which the activation means (334) are arranged so as to interrupt the supply of the transmission unit and a second position in which the activation means (334) are arranged so as to activate the supply of the transmission unit.

3. The system according to any one of claims 1 or 2, wherein
- the information analysis and filtering unit (310) is further intended to generate a first operation termination signal indicating the completion of the information analysis and filtering unit (310) operations;
- the information encryption unit (320) is further intended to generate a second operation termination signal indicating the completion of operations of the information encryption unit (320); and
- the processor (350) is further intended to generate the command signal in response to the successive generation of the first operation termination signal and the second operation termination signal.

4. The system according to any one of claims 1, 2 or 3, further comprising
- a memory port coupled to the processor and intended to receive a portable memory; and
- a portable memory receivable in the memory port and configured for storing filtering data and encryption data;
wherein, the processor is further intended to configure the filtering signal and the encryption signal, based on the filtering data and encryption data, respectively.

5. The system according to claim 4 wherein
- the portable memory is further configured for storing at least one contact list comprising at least one call number for a mobile device to be contacted, where each call number is related to at least one second metadata related to the operation of the first information system;
- the processor is further intended to include the contact list in the filtering signal;
- the information analysis and filtering unit is further intended to generate a relationship message relating the filtered message and at least one call number for which the at least one second metadata matches the first metadata;
- the information encryption unit is further intended to relate the relationship message to the encrypted message; and
- the message sending unit is further intended to send the call message depending on the relationship message.

6. The system according to claim 5 wherein the message sending unit is further intended to generate and send a periodic pulse message while waiting for a call message.

7. The system according to any one of claims 1, 2, 3, 4, 5 or 6 wherein the message sending unit is further intended to destroy the call message following sending the call message.

8. The system according to any one of claims 1, 2, 3, 4, 5, 6 or 7 wherein the message sending unit is configured for sending the call message by using a messaging protocol chosen among at least one of the following protocols: SMS, MMS, XMPP and SMTP.

9. The system according to any one of claims 1, 2, 3, 4, 5, 6, 7 or 8, wherein
- the information analysis and filtering unit, the information encryption unit and the processor are included in a first enclosure;
- the data diode circuit is included in a second enclosure; and
- the message sending unit is included in a third enclosure;
wherein the first enclosure, second enclosure and third enclosure are geographically distinct from each other such that no electromagnetic radiation can be picked-up from one enclosure to another.

10. The system according to any one of claims 1, 2, 3, 4, 5, 6, 7, 8 or 9, wherein
- the information analysis and filtering unit, the information encryption unit, the processor and the message sending unit are included in a first enclosure; and
- the data diode circuit is included in a second enclosure;
wherein, the first enclosure and second enclosure are geographically distinct from each other such that no electromagnetic radiation can be picked-up from one enclosure to another.

11. A method (400) for transmission of at least one message from a first network (100) of a first information system towards a second network (200) of a second information system, where the first network (100) has a higher security classification than the second network, and where the message comprises at least one first metadata related to the operation of the first information system, the method comprising the following steps:
- generating (410) a filtered message by filtering the message depending on a filtering signal such that at least one sensitive information related to the at least one first metadata is masked;
- generating (420) an encrypted message by encrypting the filtered message depending on an encryption signal;
- unidirectionally transferring (430), by a data diode circuit, the encrypted message from the secured network (100) to the unsecured network (200) depending on a command signal, only when the filtering and encryption have been done.
